# EUROPÄISCHE PATENTANMELDUNG

(11) **EP 0 873 901 A2**
(43) Veröffentlichungstag der Anmeldung: **28.10.1998**
(21) Anmeldenummer: 98250118.1
(22) Anmeldetag: 03.04.1998
(51) Int. Cl.: B60K 17/10, B60K 25/04

(54) **Antrieb für ein Fahrbares Arbeitsgerät**

(30) Priorität: 18.04.1997 DE 19717708
(71) Anmelder: MANNESMANN Aktiengesellschaft, 40213 Düsseldorf (DE)
(72) Erfinder: Macit, Recep, Dipl.-Ing., 40625 Düsseldorf (DE)
(74) Vertreter: Meissner, Peter E., Dipl.-Ing.

(57) **Zusammenfassung**

Die Erfindung betrifft einen Antrieb für ein fahrbares Arbeitsgerät, bestehend aus einem Antriebsaggregat (1), vorzugsweise einem Dieselmotor aus hydraulischen Verstellpumpen (2) für einen hydraulischen Fahrantrieb mit Hydromotoren (3) und aus hydraulischen Verstellpumpen (7) für die Versorgung der Arbeitshydraulik zur Ausführung gerätespezifischer Funktionen. Dabei speisen die Verstellpumpen (2) für den hydraulischen Fahrantrieb gleichzeitig mindestens einen zu- und abschaltbaren hydraulischen Motor (6) zum Antrieb der Verstellpumpen (7) für die Arbeitshydraulik. Hierzu die Figur.

## Beschreibung

Die Erfindung betrifft einen Antrieb für ein fahrbares Arbeitsgerät, bestehend aus einem Antriebsaggregat, vorzugsweise einem Dieselmotor, aus hydraulischen Verstellpumpen für einen hydraulischen Fahrantrieb mit Hydromotoren und aus hydraulischen Verstellpumpen für die Versorgung der Arbeitshydraulik zur Ausführung gerätespezifischer Funktionen.

Die Erfindung ist in allen mobilen Arbeitsgeräten mit Schienen-, Reifen- oder Kettenfahrwerken einsetzbar, in denen eine Arbeitshydraulik mit der Fahrhydraulik des Gerätes kombiniert ist. Bekannte Antriebe derartiger Geräte ordnen den einzelnen Verbrauchem, beispielsweise den Fahrantrieben, den hydraulischen Hubwerken, den Wipp- oder Drehwerken Verstellpumpen zu, die die jeweiligen Arbeitsorgane mit Druckmittel versorgen. Diese Verstellpumpen werden an Pumpenverteilergetrieben angeflanscht, die ihrerseits von dem Antriebsaggregat, in der Regel einem Dieselmotor getrieben werden. Diese Pumpenverteilergetriebe sind nicht nur teuer, sie reduzieren auch den Wirkungsgrad des Antriebsstranges deutlich.

Aufgabe der vorliegenden Erfindung ist es, ausgehend von dem bekannten Antriebskonzept einen Antrieb für ein gattungsgemäßes Arbeitsgerät vorzuschlagen, mit dem die Herstellkosten reduziert und der Wirkungsgrad des Antriebes verbessert werden kann.

Zur Lösung wird erfindungsgemäß vorgeschlagen, daß die Verstellpumpen für den hydraulischen Fahrantrieb gleichzeitig mindestens einen zu- und abschaltbaren hydraulischen Motor zum Antrieb der Verstellpumpen für die Arbeitshydraulik speisen. Durch diesen Vorschlag kann das Pumpenverteilergetriebe mit den antriebsspezifischen Wirkungsgradverlusten deshalb entfallen, weil die Verstellpumpen für den hydraulischen Fahrantrieb gleichzeitig zum Antrieb der Arbeitshydraulik verwendet werden.

In einer günstigen Ausgestaltung der Erfindung ist vorgesehen, daß die Verstellpumpen für den hydraulischen Fahrantrieb mit den Hydromotoren in einem geschlossenen Kreislauf geschaltet sind, von dem ein zweiter geschlossener Kreislauf zu- und abschaltbar abgezweigt ist, der den hydraulischen Motor für die Arbeitshydraulik versorgt. Bei dieser Anordnung reduziert sich der Einbauraum der Arbeitshydraulik erheblich, weil die Verstellpumpen zur Versorgung der Arbeitshydraulik nicht mehr in der Nähe des Antriebsaggregates an Pumpenverteilergetrieben angeflanscht sein müssen.

Günstigerweise ist nach einem anderen Merkmal der Erfindung der hydraulische Motor für die Arbeitshydraulik ein Konstantmotor, wobei zum Zu- und Abschalten des zweiten geschlossenen Kreislaufes Vier-Wege-Ventile vorgesehen sind, die mikroprozessorgesteuert in Abhängigkeit von der Drehrichtung der Verstellpumpen für den hydraulischen Fahrantrieb schaltbar sind. Der Konstantmotor dreht stets in einer Drehrichtung, wobei die Vier-Wege-Ventile entsprechend der momentanen Drehrichtung der Verstellpumpen für den hydraulischen Fahrantrieb gesteuert werden. Die Verstellpumpen für den hydraulischen Fahrantrieb sind richtungsänderbar, um die Drehrichtung der Hydromotoren für das Arbeitsgerät ändern zu können.

Vorzugsweise sind nach einem besonderen Merkmal der Erfindung die Antriebswellen der die Hydromotoren des Fahrantriebes speisenden Verstellpumpen direkt mit der Antriebswelle des Antriebsaggregates verbunden. Dadurch ergibt sich eine besonders platzsparende kompakte Einbaulösung.

Die Erfindung weist eine Reihe von Vorteilen auf, zu denen vor allem der Wegfall der teuren Pumpenverteilergetriebe gehört. Dadurch verbessert sich im Vergleich zu einem konventionellen Fahrantrieb der Wirkungsgrad η des Antriebes um ca.10-15 %. Mit dem Wegfall des Pumpenverteilergetriebes entfällt auch der sonst erforderliche Kühlkreislauf, was ebenfalls der Verbesserung des Wirkungsgrades η zugute kommt. Eine Mooring-Schaltung in Verbindung mit dem Fahrantrieb ist nicht mehr erforderlich. Der Einbauraum der Arbeitshydraulik reduziert sich erheblich. Beim Bremsen des Gerätes werden die Stellpumpen der Arbeitshydraulik zu Retarderpumpen; der Dieselmotor wird zum Bremsvorgang auf Leerlaufdrehzahl gefahren. Darüber hinaus kann beim Bremsvorgang die Bremsenergie zum Teil als Antrieb des Dieselmotorlüfters verwendet werden, was einer weiteren Verbesserung des Wirkungsgrades η dient. Mit der Erfindung lassen sich die Herstellkosten eines Antriebes für ein gattungsgemäßes Arbeitsgerät um ca. 20 % reduzieren. Durch Reduzierung der Betriebskosten infolge der 10 bis 15 %-igen Wirkungsgradverbesserung bestehen bessere Vertriebschancen im Markt.

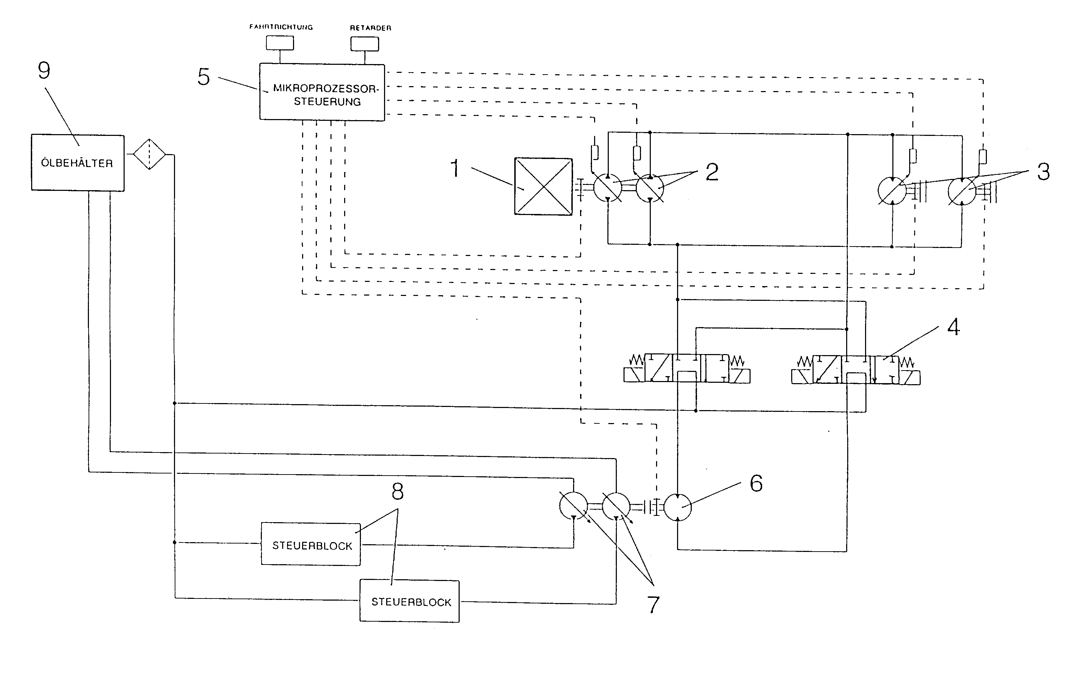

Ein Ausführungsbeispiel der Erfindung ist in der Zeichnung dargestellt und wird im folgenden beschrieben.

Die Zeichnung zeigt in vereinfachter Darstellung den Schaltplan eines hydraulischen Fahrantriebes mit zuschaltbarer Arbeitshydraulik. Mit 1 ist das Antriebsaggregat in Form eines Dieselmotors bezeichnet. An diesen Dieselmotor 1 sind die Verstellpumpen 2 für den hydraulischen Fahrantrieb direkt angeflanscht, der durch die als Verstellmotoren dargestellten Hydromotoren 3 symbolisiert ist. Mit 4 ist in dem Schaltplan eines von zwei gleich ausgebildeten Vier-Wege-Ventilen bezeichnet, deren Funktion später noch beschrieben wird. 5 bezeichnet eine Mikroprozessorsteuerung für den hydraulischen Fahrantrieb und die Arbeitshydraulik. Der Konstantmotor zur Versorgung der Arbeitshydraulik ist mit 6 bezeichnet; mit ihm werden die Verstellpumpen 7 angetrieben, die über die Steuerblöcke 8 die jeweiligen (nicht dargestellten) Verbraucher versorgen. Mit 9 ist der Ölbehälter beziffert.

Die Verstellpumpen 2 für den hydraulischen Fahrantrieb sind, wie erkennbar ist, direkt an die Antriebswelle des Dieselmotors 1 angeflanscht. Zum Fahren des Arbeitsgerätes arbeiten dieam Dieselmotor 1 angeflanschten Verstellpumpen 2 und die Hydromotoren 3 im geschlossenen Kreislauf, während die Vier-Wege-Ventile 4 auf Stellung Null (dargestellte Stellung) geschaltet sind.

Zum Fahren des Arbeitsgerätes und gleichzeitigem Betrieb der Arbeitshydraulik arbeiten die Verstellpumpen 2, die Hydromotoren 3 des Fahrwerkes und der Konstantmotor 6 für die Arbeitshydraulik im geschlossenen Kreislauf. Die Vier-Wege-Ventile 4 sind auf Stellung 1 oder 2 (nach rechts oder links verschoben) geschaltet, die Ventilstellung ist von der momentanen Drehrichtung der Verstellpumpen 2 am Dieselmotor abhängig und wird mittels des Mikroprozessors 5 entsprechend gesteuert.

Beim Stillstand des Arbeitsgerätes und gleichzeitigem Betrieb der Arbeitshydraulik arbeiten die am Dieselmotor 1 angeflanschten Verstellpumpen 2, die auf Null geschwenkten Hydromotoren 3 des Fahrwerkes und der Konstantmotor 6 der Arbeitshydraulik im geschlossenen Kreislauf. Die Vier-Wege-Ventile 4 sind auf Stellung 1 oder 2 (nach rechts oder links verschoben) geschaltet; auch hierbei ist die Ventilstellung von der momentanen Drehrichtung der Verstellpumpen 2 am Dieselmotor 1 abhängig und wird mittels Mikroprozessor 5 entsprechend gesteuert.

In der Retarder-Funktion werden die Verstellpumpen 2 am Dieselmotor 1 auf Null geschwenkt, die Hydromotoren 3 am Fahrwerk und der Konstantmotor 6 für die Arbeitshydraulik arbeiten im geschlossenen Kreislauf. Die Dieselmotorendrehzahl n wird auf Leerlaufdrehzahl zurückgefahren, die Vier-Wege-Ventile 4 sind auf Stellung 1 oder 2 (nach rechts oder links verschoben) geschaltet. Die Ventilstellung ist von der momentanen Drehrichtung der Hydromotoren 3 am Fahrwerk abhängig und wird mittels Mikroprozessor 5 entsprechend gesteuert. Die Hydromotoren 3 stützen sich über den Konstantmotor 6 für die Arbeitshydraulik auf die Verstellpumpen 7 für die Arbeitshydraulik gegen den eingestellten Druck ab und erfüllen somit die Bremsfunktion.

## Patentansprüche

1. Antrieb für ein fahrbares Arbeitsgerät, bestehend aus einem Antriebsaggregat (1), vorzugsweise einem Dieselmotor aus hydraulischen Verstellpumpen (2) für einen hydraulischen Fahrantrieb mit Hydromotoren (3) und aus hydraulischen Verstellpumpen (7) für die Versorgung der Arbeitshydraulik zur Ausführung gerätespezifischer Funktionen,
dadurch gekennzeichnet,
daß die Verstellpumpen (2) für den hydraulischen Fahrantrieb gleichzeitig mindestens einen zu- und abschaltbaren hydraulischen Motor (6) zum Antrieb der Verstellpumpen (7) für die Arbeitshydraulik speisen.

2. Antrieb für ein fahrbares Arbeitsgerät nach Anspruch 1,
dadurch gekennzeichnet,
daß die Verstellpumpen (2) für den hydraulischen Fahrantrieb mit den Hydromotoren (3) in einem geschlossenen Kreislauf geschaltet sind, von dem ein zweiter geschlossener Kreislauf zu- und abschaltbar abgezweigt ist, der den hydraulischen Motor (6) für die Arbeitshydraulik versorgt.

3. Antrieb für ein fahrbares Arbeitsgerät nach Anspruch 1 und 2,
dadurch gekennzeichnet,
daß der hydraulischen Motor (6) für die Arbeitshydraulik ein Konstantmotor ist und zum Zu- und Abschalten des zweiter geschlossenen Kreislaufes 4-Wegeventile (4) vorgesehen sind, die mikroprozessorgesteuert (5) in Abhängigkeit von der Drehrichtung der Verstellpumpen (2) für den hydraulischen Fahrantrieb schaltbar sind.

4. Antrieb für ein fahrbares Arbeitsgerät nach Anspruch 1 bis 3,
dadurch gekennzeichnet,
daß die Antriebswellen der die Hydromotoren (3) des Fahrantriebes speisenden Verstellpumpen (2) direkt mit der Abtriebswelle des Antriebsagregates (1) verbunden ist.
